# EUROPEAN PATENT APPLICATION

(11) **EP 4 060 445 A1**
(43) Date of publication of application: **21.09.2022**
(21) Application number: 20886244.1
(22) Date of filing: 21.10.2020
(51) Int. Cl.: G05D 1/02

(54) **SELF-POSITION ESTIMATION MODEL LEARNING METHOD, SELF-POSITION ESTIMATION MODEL LEARNING DEVICE, SELF-POSITION ESTIMATION MODEL LEARNING PROGRAM, SELF-POSITION ESTIMATION METHOD, SELF-POSITION ESTIMATION DEVICE, SELF-POSITION ESTIMATION PROGRAM, AND ROBOT**

(30) Priority: 13.11.2019 JP 2019205691
(71) Applicant: OMRON Corporation, Kyoto-shi, Kyoto 600-8530 (JP)
(72) Inventor: KUROSE, Mai, Tokyo 113-0033 (JP); YONETANI, Ryo, Tokyo 113-0033 (JP)
(74) Representative: SONN Patentanwälte OG
(86) International application number: PCT/JP2020/039553
(87) International publication number: WO 2021/095463

(57) **Abstract**

A self-position estimation model learning device (10) includes: an acquisition unit (30) that acquires, in time series, a local image captured from a viewpoint of a self-position estimation subject in a dynamic environment, and a bird's-eye view image which is captured from a location overlooking the self-position estimation subject and is synchronized with the local image; and a learning unit (32) for learning a self-position estimation model that takes the local image and the bird's-eye view image acquired in time series as input, and outputs the position of the self-position estimation subject.

## Description

### Technical Field

The technique of the present disclosure relates to a self-position estimation model learning method, a self-position estimation model learning device, a self-position estimation model learning program, a self-position estimation method, a self-position estimation device, a self-position estimation program, and a robot.

### Background Art

In a conventional self-position estimation (Simultaneously Localization and Mapping: SLAM) algorithm that is based on feature points (see, for example, Non-Patent Document 1, "ORB-SLAM2: an Open-Source {SLAM} System for Monocular, Stereo and {RGB-D} Cameras https://128.84.21.199/pdf/1610.06475.pdf'), movement information of rotations and translations is computed by observing static feature points in a three-dimensional space from plural viewpoints.

However, in an environment that includes many moving objects and screens such as a crowd scene, the geometric constraints fail, and stable position reconstruction is not possible, and the self-position on the map frequently becomes lost (see, for example, Non-Patent Document 2, "Getting Robots Unfrozen and Unlost in Dense Pedestrian Crowds https://arxiv.org/pdf/1810.00352.pdf').

As another method of handling moving objects, there are a method of visibly modeling the movements of moving objects, and a robust estimation method that uses an error function so as to reduce the effects of the places corresponding to the moving objects. However, neither of these can be applied to a complex and dense dynamic environment such as a crowd.

Further, in SLAM that is based on feature points and is exemplified by the technique of Non-Patent Document 1, scenes that are the same can be recognized by creating visual vocabulary from feature points of scenes, and storing the visual vocabulary in a database.

Further, Non-Patent Document 3 ([N.N+,ECCV' 16] Localizing and Orienting Street Views Using Overhead Imagery https://lugiavn.github.io/gatech/crossview_eccv2016/nam_eccv2016.pdf) and Non-Patent Document 4 ([S.Workman+,ICCV' 15] Wide-Area Image Geolocalization with Aerial Reference Imagery https://www.cv-foundation/org/openaccess/content_iccv_2015/papers/Workman_Wide-Area_Image_Geolocalization_ICCV_2015_paper.pdf) disclose techniques of carrying out feature extraction respectively from bird's-eye view images and local images, and making it possible to search for which blocks of the bird's-eye view images the local images correspond to respectively.

### SUMMARY OF INVENTION

### Technical Problem

However, in both of the techniques of above-described Non-Patent Documents 3 and 4, only the degree of similarity between images of static scenes is used as a clue for matching, and the matching accuracy is low, and a large amount of candidate regions arise.

The technique of the disclosure was made in view of the above-described points, and an object thereof is to provide a self-position estimation model learning method, a self-position estimation model learning device, a self-position estimation model learning program, a self-position estimation method, a self-position estimation device, a self-position estimation program, and a robot that can estimate the self-position of a self-position estimation subject even in a dynamic environment in which the estimation of the self-position of a self-position estimation subject has conventionally been difficult.

### Solution to Problem

A first aspect of the disclosure is a self-position estimation model learning method in which a computer executes processings comprising: an acquiring step of acquiring, in time series, local images captured from a viewpoint of a self-position estimation subject in a dynamic environment and bird's-eye view images that are bird's-eye view images captured from a position of looking down on the self-position estimation subject and that are synchronous with the local images; and a learning step of learning a self-position estimation model whose inputs are the local images and the bird's-eye view images acquired in time series and that outputs a position of the self-position estimation subject.

In the above-described first aspect, the learning step may include: a trajectory information computing step of computing first trajectory information on the basis of the local images, and computing second trajectory information on the basis of the bird's-eye view images; a feature amount computing step of computing a first feature amount on the basis of the first trajectory information, and computing a second feature amount on the basis of the second trajectory information; a distance computing step of computing a distance between the first feature amount and the second feature amount; an estimating step of estimating the position of the self-position estimation subject on the basis of the distance; and an updating step of updating parameters of the self-position estimation model such that, the higher a degree of similarity between the first feature amount and the second feature amount, the smaller the distance.

In the above-described first aspect, the feature amount computing step may compute the second feature amount on the basis of the second trajectory information in a plurality of partial regions that are selected from a region that is in a vicinity of a position of the self-position estimation subject that was estimated a previous time, the distance computing step may compute the distance for each of the plurality of partial regions, and the estimating step may estimate, as the position of the self-position estimation subject, a predetermined position of a partial region of the smallest distance among the distances computed for the plurality of partial regions.

A second aspect of the disclosure is a self-position estimation model learning device comprising: an acquiring section that acquires, in time series, local images captured from a viewpoint of a self-position estimation subject in a dynamic environment and bird's-eye view images that are bird's-eye view images captured from a position of looking down on the self-position estimation subject and that are synchronous with the local images; and a learning section that learns a self-position estimation model whose inputs are the local images and the bird's-eye view images acquired in time series and that outputs a position of the self-position estimation subject.

A third aspect of the disclosure is a self-position estimation model learning program that is a program for causing a computer to execute processings comprising: an acquiring step of acquiring, in time series, local images captured from a viewpoint of a self-position estimation subject in a dynamic environment and bird's-eye view images that are bird's-eye view images captured from a position of looking down on the self-position estimation subject and that are synchronous with the local images; and a learning step of learning a self-position estimation model whose inputs are the local images and the bird's-eye view images acquired in time series and that outputs a position of the self-position estimation subject.

A fourth aspect of the disclosure is a self-position estimation method in which a computer executes processings comprising: an acquiring step of acquiring, in time series, local images captured from a viewpoint of a self-position estimation subject in a dynamic environment and bird's-eye view images that are bird's-eye view images captured from a position of looking down on the self-position estimation subject and that are synchronous with the local images; and an estimating step of estimating a self-position of the self-position estimation subject on the basis of the local images and the bird's-eye view images acquired in time series and the self-position estimation model learned by the self-position estimation model learning method of the above-described first aspect.

A fifth aspect of the disclosure is a self-position estimation device comprising: an acquiring section that acquires, in time series, local images captured from a viewpoint of a self-position estimation subject in a dynamic environment and bird's-eye view images that are bird's-eye view images captured from a position of looking down on the self-position estimation subject and that are synchronous with the local images; and an estimation section that estimates a self-position of the self-position estimation subject on the basis of the local images and the bird's-eye view images acquired in time series and the self-position estimation model learned by the self-position estimation model learning device of the above-described second aspect.

A sixth aspect of the disclosure is a self-position estimation program that is a program for causing a computer to execute processings comprising: an acquiring step of acquiring, in time series, local images captured from a viewpoint of a self-position estimation subject in a dynamic environment and bird's-eye view images that are bird's-eye view images captured from a position of looking down on the self-position estimation subject and that are synchronous with the local images; and an estimating step of estimating a self-position of the self-position estimation subject on the basis of the local images and the bird's-eye view images acquired in time series and the self-position estimation model learned by the self-position estimation model learning method of the above-described first aspect.

A seventh aspect of the disclosure is a robot comprising: an acquiring section that acquires, in time series, local images captured from a viewpoint of the robot in a dynamic environment and bird's-eye view images that are bird's-eye view images captured from a position of looking down on the robot and that are synchronous with the local images; an estimation section that estimates a self-position of the robot on the basis of the local images and the bird's-eye view images acquired in time series and the self-position estimation model learned by the self-position estimation model learning device of the above-described second aspect; an autonomous traveling section that causes the robot to travel autonomously; and a control section that, on the basis of the position estimated by the estimation section, controls the autonomous traveling section such that the robot moves to a destination.

### Advantageous Effects of Invention

In accordance with the technique of the disclosure, the self-position of a self-position estimation subject can be estimated even in a dynamic environment in which the estimation of the self-position of a self-position estimation subject has conventionally been difficult.

### BRIEF DESCRIPTION OF DRAWINGS

Fig. 1 is a drawing illustrating the schematic structure of a self-position estimation model learning system.
Fig. 2 is a block drawing illustrating hardware structures of a self-position estimation model learning device.
Fig. 3 is a block drawing illustrating functional structures of the self-position estimation model learning device.
Fig. 4 is a drawing illustrating a situation in which a robot moves within a crowd to a destination.
Fig. 5 is a block drawing illustrating functional structures of a learning section of the self-position estimation model learning device.
Fig. 6 is a drawing for explaining partial regions.
Fig. 7 is a flowchart illustrating the flow of self-position estimation model learning processing by the self-position estimation model learning device.
Fig. 8 is a block drawing illustrating functional structures of a self-position estimation device.
Fig. 9 is a block drawing illustrating hardware structures of the self-position estimation device.
Fig. 10 is a flowchart illustrating the flow of robot controlling processing by the self-position estimation device.

### DESCRIPTION OF EMBODIMENTS

Examples of embodiments of the technique of the present disclosure are described hereinafter with reference to the drawings. Note that structural elements and portions that are the same or equivalent are denoted by the same reference numerals in the respective drawings. Further, there are cases in which the dimensional proportions in the drawings are exaggerated for convenience of explanation, and they may differ from actual proportions.

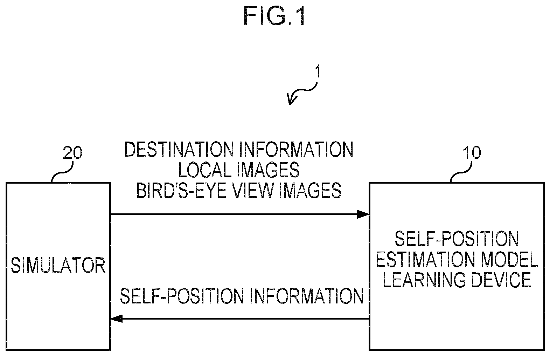

Fig. 1 is a drawing illustrating the schematic structure of a self-position estimation model learning system 1.

As illustrated in Fig. 1, the self-position estimation model learning system 1 has a self-position estimation model learning device 10 and a simulator 20. The simulator 20 is described later.

The self-position estimation model learning device 10 is described next.

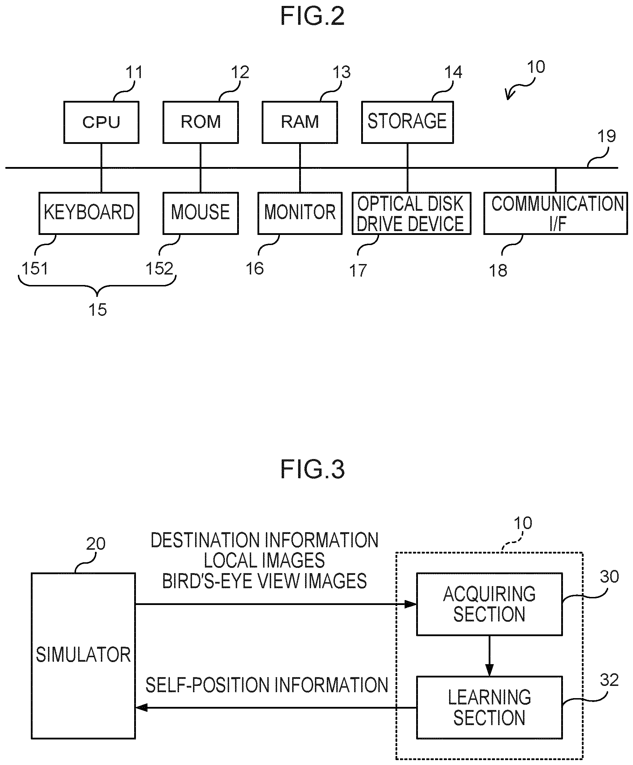

Fig. 2 is a block drawing illustrating hardware structures of the self-position estimation model learning device 10.

As illustrated in Fig. 2, the self-position estimation model learning device 10 has a CPU (Central Processing Unit) 11, a ROM (Read Only Memory) 12, a RAM (Random Access Memory) 13, a storage 14, an input portion 15, a monitor 16, an optical disk drive device 17 and a communication interface 18. These respective structures are connected so as to be able to communicate with one another via a bus 19.

In the present embodiment, a self-position estimation model learning program is stored in the storage 14. The CPU 11 is a central computing processing unit, and executes various programs and controls the respective structures. Namely, the CPU 11 reads-out a program from the storage 14, and executes the program by using the RAM 13 as a workspace. The CPU 11 caries out control of the above-described respective structures, and various computing processings, in accordance with the programs recorded in the storage 14.

The ROM 12 stores various programs and various data. The RAM 13 temporarily stores programs and data as a workspace. The storage 14 is structured by an HDD (Hard Disk Drive) or an SSD (Solid State Drive), and stores various programs, including the operating system, and various data.

The input portion 15 includes a keyboard 151 and a pointing device such as a mouse 152 or the like, and is used in order to carry out various types of input. The monitor 16 is a liquid crystal display for example, and displays various information. The monitor 16 may function as the input portion 15 by employing a touch panel type therefor. The optical disk drive device 17 reads-in data that is stored on various recording media (a CD-ROM or a flexible disk or the like), and writes data to recording media, and the like.

The communication interface 18 is an interface for communicating with other equipment such as the simulator 20 and the like, and uses standards such as, for example, Ethernet^{®}, FDDI, Wi-Fi^{®}, or the like.

Functional structures of the self-position estimation model learning device 10 are described next.

Fig. 3 is a block drawing illustrating an example of the functional structures of the self-position estimation model learning device 10.

As illustrated in Fig. 3, the self-position estimation model learning device 10 has an acquiring section 30 and a learning section 32 as functional structures thereof. The respective functional structures are realized by the CPU 11 reading-out a self-position estimation program that is stored in the storage 14, and expanding and executing the program in the RAM 13.

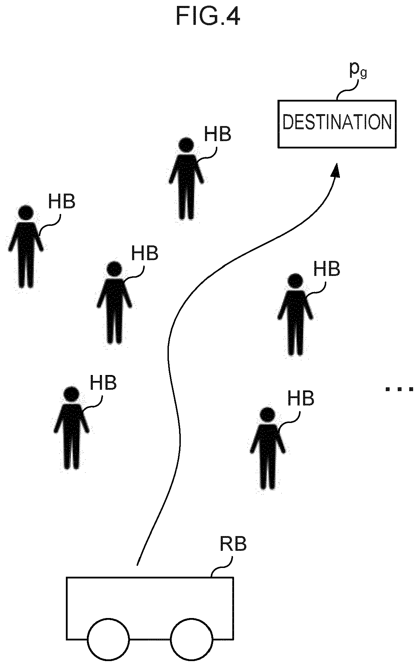

The acquiring section 30 acquires destination information, local images and bird's-eye view images from the simulator 20. For example, as illustrated in Fig. 4, the simulator 20 outputs, in time series, local images in a case in which an autonomously traveling robot RB moves to destination p_{g} expressed by destination information, and bird's-eye view images that are synchronous with the local images.

Note that, in the present embodiment, as illustrated in Fig. 4, the robot RB moves to the destination p_{g} through a dynamic environment that includes objects that move, such as humans HB that exist in the surroundings, or the like. The present embodiment describes a case in which the objects that move are the humans HB, i.e., a case in which the dynamic environment is a crowd, but the technique of the present disclosure is not limited to this. For example, examples of other dynamic environments include environments in which there exist automobiles, autonomously traveling robots, drones, airplanes, ships or the like, or the like.

Here, the local image is an image that is captured from the viewpoint of the robot RB, which serves as the self-position estimation subject, in a dynamic environment such as illustrated in Fig. 4. Note that, although a case is described hereinafter in which the local image is an image captured by an optical camera, the technique of the present disclosure is not limited to this. Namely, provided that it is possible to acquire motion information that expresses how the objects that exist within the range of the visual field of the robot RB move, motion information that is acquired by using an event based camera for example may be used, or motion information after image processing of local images by a known method such as optical flow or the like may be used.

Further, the bird's-eye view image is an image that is captured from a position of looking down on the robot RB. Specifically, the bird's-eye view image is an image in which, for example, a range including the robot RB is captured from above the robot RB, and is an image in which a range that is wider than the range expressed by the local image is captured. Note that, as the bird's-eye view image, a RAW (raw image format) image may be used, or a dynamic image such as a video after image processing or the like may be used.

The learning section 32 learns a self-position estimation model whose inputs are the local images and the bird's-eye view images that are acquired in time series from the acquiring section 30, and that outputs the position of the robot RB.

The learning section 32 is described in detail next.

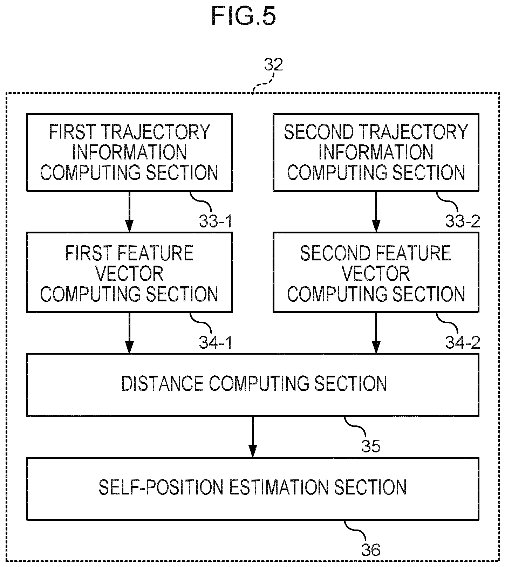

As illustrated in Fig. 5, the learning section 32 includes a first trajectory information computing section 33-1, a second trajectory information computing section 33-2, a first feature vector computing section 34-1, a second feature vector computing section 34-2, a distance computing section 35, and a self-position estimation section 36.

The first trajectory information computing section 33-1 computes first trajectory information t₁ of the humans HB, on the basis of N (N is a plural number) local images I1 (= {I1₁, I1₂, ..., I1_{N}}) that are continuous over time and are inputted from the acquiring section 30. A known method such as, for example, the aforementioned optical flow or MOT (Multi Object Tracking) or the like can be used in computing the first trajectory information t1, but the computing method is not limited to this.

The second trajectory information computing section 33-2 computes second trajectory information t₂ of the humans HB, on the basis of N bird's-eye view images 12 (= {I2₁, I2₂, ..., I2_{N}}) that are continuous over time and are synchronous with the local images I1 and are inputted from the acquiring section 30. In the same way as the computing of the first trajectory information, a known method such as optical flow or the like can be used in computing the second trajectory information t₂, but the computing method is not limited to this.

The first feature vector computing section 34-1 computes first feature vector *φ*₁(t₁) of Ki dimensions of the first trajectory information t₁. Specifically, the first feature vector computing section 34-1 computes the first feature vector *φ*₁(t₁) of Ki dimensions by inputting the first trajectory information t₁ to, for example, a first convolutional neural network (CNN). Note that the first feature vector *φ*₁(t₁) is an example of the first feature amount, but the first feature amount is not limited to a feature vector, and another feature amount may be computed.

The second feature vector computing section 34-2 computes second feature vector *φ*₂(t₂) of K₂ dimensions of the second trajectory information t₂. Specifically, in the same way as the first feature vector computing section 34-1, the second feature vector computing section 34-2 computes the second feature vector *φ*₂(t₂) of K₂ dimensions by inputting the second trajectory information t₂ to, for example, a second convolutional neural network that is different than the first convolutional neural network used by the first feature vector computing section 34-1. Note that the second feature vector *φ*₂(t₂) is an example of the second feature amount, but the second feature amount is not limited to a feature vector, and another feature amount may be computed.

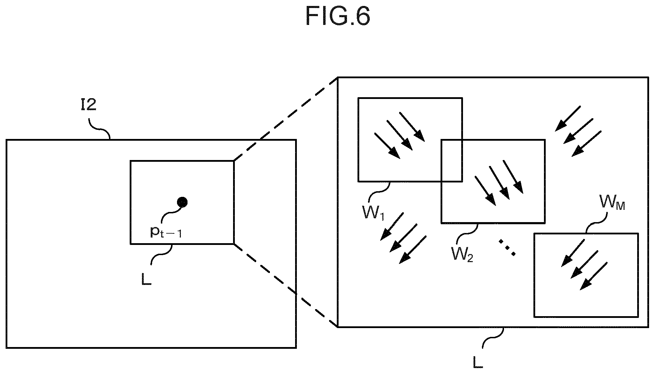

Here, as illustrated in Fig. 6, the second trajectory information t₂ that is inputted to the second convolutional neural network is not the trajectory information of the entire bird's-eye view image 12, and is second trajectory information t₂₁ ~ t_{2M} in M (M is a plural number) partial regions W₁ ~ W_{M} that are randomly selected from within a local region L that is in the vicinity of position pₜ₋₁ of the robot RB that was detected the previous time. Due thereto, second feature vectors *φ*₂(t₂₁) ~ *φ*₂(t_{2M}) are computed for the partial regions W₁ ~ W_{M} respectively. Hereinafter, when not differentiating between the second trajectory information t₂₁ ~ t_{2M}, there are cases in which they are simply called the second trajectory information ₜ₂. Similarly, when not differentiating between the second feature vectors *φ*₂(t₂₁) ~ *φ*₂(t_{2M}), there are cases in which they are simply called the second feature vectors *φ*₂(t₂).

Note that the local region L is set so as to include a range in which the robot RB can move from the position pₜ₋₁ of the robot RB that was detected the previous time. Further, the positions of the partial regions W₁ ~ W_{M} are randomly selected from within the local region L. Further, the number of the partial regions W₁ ~ W_{M} and the sizes of the partial regions W₁ ~ W_{M} affect the processing velocity and the self-position estimation accuracy. Accordingly, the number of the partial regions W₁ ~ W_{M} and the sizes of the partial regions W₁ ~ W_{M} are set to arbitrary values in accordance with the desired processing velocity and self-position estimation accuracy. Hereinafter, when not differentiating between the partial regions W₁ ~ W_{M}, there are cases in which they are simply called the partial region W. Note that, although the present embodiment describes a case in which the partial regions W₁ ~ W_{M} are selected randomly from within the local region L, setting of the partial regions W is not limited to this. For example, the partial regions W₁ ~ W_{M} may be set by dividing the local region L equally.

The distance computing section 35 computes distances g(*φ*₁(t₁), *φ*₂(t₂₁)) ~ g(*φ*₁(t₁), *φ*₂(t_{2M})), which express the respective degrees of similarity between the first feature vector *φ*₁(t₁) and the second feature vectors *φ*₂(t₂₁) ~ *φ*₂(t_{2M}) of the partial regions W₁ ~ W_{M}, by using a neural network for example. Then, this neural network is trained such that, the higher the degree of similarity between the first feature vector *φ*₁(t₁) and the second feature vector *φ*₂(t₂), the smaller the distance g(*φ*₁(t₁), *φ*₂(t₂)).

Note that the first feature vector computing section 34-1, the second feature vector computing section 34-2 and the distance computing section 35 can use a known learning model such as, for example, a Siamese Network using contrastive loss, or triplet loss, or the like. In this case, the parameters of the neural network that is used at the first feature vector computing section 34-1, the second feature vector computing section 34-2 and the distance computing section 35 are learned such that, the higher the degree of similarity between the first feature vector *φ*₁(t₁) and the second feature vector *φ*₂(t₂), the smaller the distance g(*φ*₁(t₁), *φ*₂(t₂)). Further, the method of computing the distance is not limited to cases using a neural network, and Mahalanobis distance learning that is an example of distance learning (metric learning) may be used.

The self-position estimation section 36 estimates, as the self-position pₜ, a predetermined position, e.g., the central position, of the partial region W of the second feature vector *φ*₂(t₂) that corresponds to the smallest distance among the distances g(*φ*₁(t₁), *φ*₂(t₂₁)) ~ g(*φ*₁(t₁), *φ*₂(t_{2M})) computed by the distance computing section 35.

In this way, the self-position estimation model learning device 10 can be called a device that, functionally and on the basis of local images and bird's-eye view images, learns a self-position estimation model that estimates and outputs the self-position.

Operation of the self-position estimation model learning device 10 is described next.

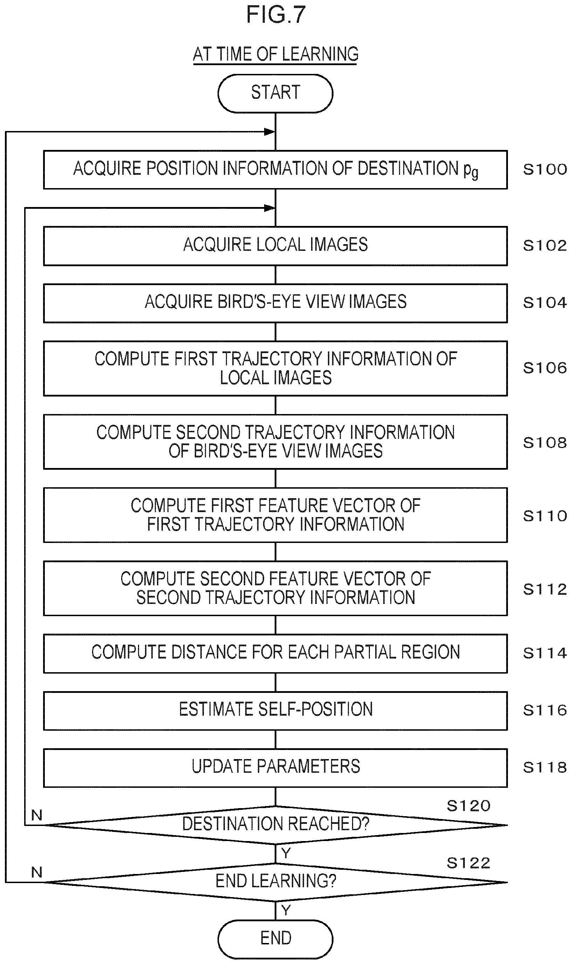

Fig. 7 is a flowchart illustrating the flow of self-position estimation model learning processing by the self-position estimation model learning device 10. The self-position estimation model learning processing is carried out due to the CPU 11 reading-out the self-position estimation model learning program from the storage 14, and expanding and executing the program in the RAM 13.

In step S100, as the acquiring section 30, the CPU 11 acquires position information of the destination p_{g} from the simulator 20.

In step S102, as the acquiring section 30, the CPU 11 acquires the N local images I1 (= {I1₁, I1₂, ..., I1_{N}}) that are in time series from the simulator 20.

In step S104, as the acquiring section 30, the CPU 11 acquires the N bird's-eye view images 12 (= {I2₁, I2₂, ..., I2_{N}}), which are in time series and are synchronous with the local images I1, from the simulator 20.

In step S106, as the first trajectory information computing section 33-1, the CPU 11 computes the first trajectory information t₁ on the basis of the local images I1.

In step S108, as the second trajectory information computing section 33-2, the CPU 11 computes the second trajectory information t₂ on the basis of the bird's-eye view images 12.

In step S110, as the first feature vector computing section 34-1, the CPU 11 computes the first feature vector *φ*₁(t₁) on the basis of the first trajectory information t₁.

In step S112, as the second feature vector computing section 34-2, the CPU 11 computes the second feature vectors *φ*₂(t₂₁) ~ *φ*₂(t_{2M}) on the basis of the second trajectory information t₂₁ ~ t_{2M} of the partial regions W₁ ~ W_{M}, among the second trajectory information t₂.

In step S114, as the distance computing section 35, the CPU 11 computes distances g(*φ*₁(t₁), *φ*₂(t₂₁)) ~ g(*φ*₁(t₁), *φ*₂(t_{2M})) that express the respective degrees of similarity between the first feature vector *φ*₁(t₁) and the second feature vectors *φ*₂(t₂₁) ~ *φ*₂(t_{2M}). Namely, the CPU 11 computes the distance for each partial region W.

In step S116, as the self-position estimation section 36, the CPU 11 estimates, as the self-position pₜ, a representative position, e.g., the central position, of the partial region W of the second feature vector *φ*₂(t₂) that corresponds to the smallest distance among the distances g(*φ*₁(t₁), *φ*₂(t₂₁)) ~ g(*φ*₁(t₁), *φ*₂(t_{2M})) computed in step S114, and outputs the self-position to the simulator 20.

In step S118, as the learning section 32, the CPU 11 updates the parameters of the self-position estimation model. Namely, in a case in which a Siamese Network is used as the learning model that is included in the self-position estimation model, the CPU 11 updates the parameters of the Siamese Network.

In step S120, as the self-position estimation section 36, the CPU 11 judges whether or not the robot RB has arrived at the destination p_{g}. Namely, the CPU 11 judges whether or not the position pₜ of the robot RB that was estimated in step S116 coincides with the destination p_{g}. Then, if it is judged that the robot RB has reached the destination p_{g}, the routine moves on to step S122. On the other hand, if it is judged that the robot RB has not reached the destination p_{g}, the routine moves on to step S102, and repeats the processings of steps S102 ~ S120 until it is judged that the robot RB has reached the destination p_{g}. Namely, the learning model is learned. Note that the processings of steps S102, S104 are examples of the acquiring step. Further, the processings of step S 108 ~ S118 are examples of the learning step.

In step S122, as the self-position estimation section 36, the CPU 11 judges whether or not an end condition that ends the learning is satisfied. In the present embodiment, the end condition is a case in which a predetermined number of (e.g., 100) episodes has ended, with one episode being, for example, the robot RB having arrived at the destination p_{g} from the starting point. In a case in which it is judged that the end condition is satisfied, the CPU 11 ends the present routine. On the other hand, in a case in which the end condition is not satisfied, the routine moves on to step S100, and the destination p_{g} is changed, and the processings of steps S100 ~ S122 are repeated until the end condition is satisfied.

In this way, in the present embodiment, local images that are captured from the viewpoint of the robot RB and bird's-eye view images, which are bird's-eye view images captured from a position of looking downward on the robot RB and which are synchronous with the local images, are acquired in time series in a dynamic environment, and a self-position estimation model, whose inputs are the local images and bird's-eye view images acquired in time series and that outputs the position of the robot RB, is learned. Due thereto, the position of the robot RB can be estimated even in a dynamic environment in which estimation of the self-position of the robot RB was conventionally difficult.

Note that there are also cases in which the smallest distance computed in above-described step S116 is too large, i.e., cases in which estimation of the self-position is impossible. Thus, in step S116, in a case in which the smallest distance that is computed is greater than or equal to a predetermined threshold value, it may be judged that estimation of the self-position is impossible, and the partial regions W₁ ~ W_{M} may be re-selected from within the local region L that is in a vicinity of the position pₜ₋₁ of the robot RB detected the previous time, and the processings of steps S112 ~ S116 may be executed again.

Further, as another example of a case in which estimation of the self-position is impossible, there are cases in which trajectory information cannot be computed. For example, there are cases in which no humans HB whatsoever exist at the periphery of the robot RB, and there is a completely static environment, or the like. In such cases as well, the self-position estimation may be redone by executing the processings of steps S112 ~ S116 again.

The robot RB, which estimates its self-position by the self-position estimation model learned by the self-position estimation model learning device 10, is described next.

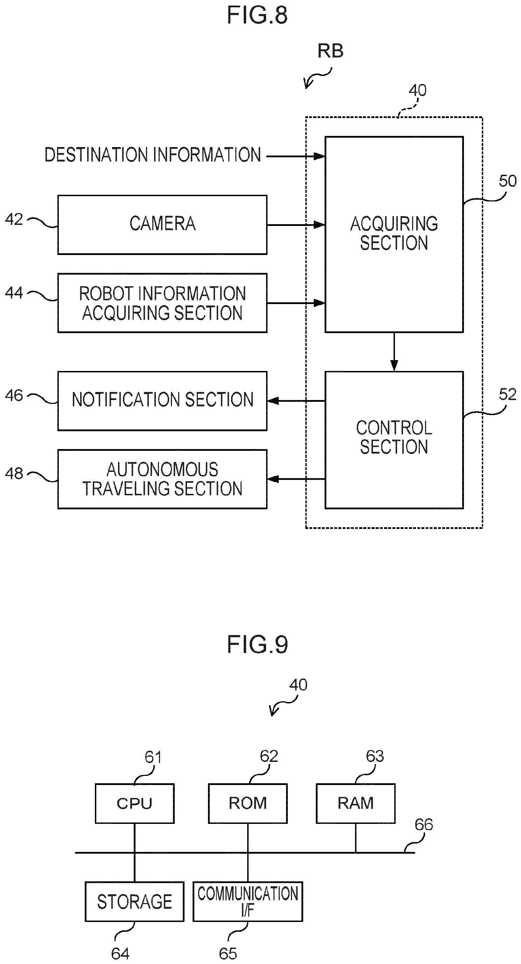

The schematic structure of the robot RB is illustrated in Fig. 8. As illustrated in Fig. 8, the robot RB has a self-position estimation device 40, a camera 42, a robot information acquiring section 44, a notification section 46 and an autonomous traveling section 48. The self-position estimation device 40 has an acquiring section 50 and a control section 52.

The camera 42 captures images of the periphery of the robot RB at a predetermined interval while the robot RB moves from the starting point to the destination p_{g}, and outputs the captured local images to the acquiring section 50 of the self-position estimation device 40.

By wireless communication, the acquiring section 50 asks an unillustrated external device for bird's-eye view images that are captured from a position of looking downward on the robot RB, and acquires the bird's-eye view images.

The control section 52 has the function of the self-position estimation model that is learned at the self-position estimation model learning device 10. Namely, the control section 52 estimates the position of the robot RB on the basis of the synchronous local images and bird's-eye view images in time series that are acquired from the acquiring section 50.

The robot information acquiring section 44 acquires the velocity of the robot RB as robot information. The velocity of the robot RB is acquired by using a velocity sensor for example. The robot information acquiring section 44 outputs the acquired velocity of the robot RB to the acquiring section 50.

The acquiring section 50 acquires the states of the humans HB on the basis of the local images captured by the camera 42. Specifically, the acquiring section 50 analyzes the captured image by using a known method, and computes the positions and the velocities of the humans HB existing at the periphery of the robot RB.

The control section 52 has the function of a learned robot control model for controlling the robot RB to travel autonomously to the destination p_{g}.

The robot control model is a model whose inputs are, for example, robot information relating to the state of the robot RB, environment information relating to the environment at the periphery of the robot RB, and destination information relating to the destination that the robot RB is to reach, and that selects a behavior corresponding to the state of the robot RB, and outputs the behavior. For example, a model that is learned by reinforcement learning is used as the robot control model. Here, the robot information includes the position and the velocity of the robot RB. Further, the environment information includes information relating to the dynamic environment, and specifically, for example, information of the positions and the velocities of the humans HB existing at the periphery of the robot RB.

Using the destination information, the position and the velocity of the robot RB and the state information of the humans HB as inputs, the control section 52 selects a behavior that corresponds to the state of the robot RB, and controls at least one of the notification section 46 and the autonomous traveling section 48 on the basis of the selected behavior.

The notification section 46 has the function of notifying the humans HB, who are at the periphery, of the existence of the robot RB by outputting a voice or outputting a warning sound.

The autonomous traveling section 48 has the function of causing the robot RB, such as the tires and a motor that drives the tires and the like, to travel autonomously.

In a case in which the selected behavior is a behavior of making the robot RB move in an indicated direction and at an indicated velocity, the control section 52 controls the autonomous traveling section 48 such that the robot RB moves in the indicated direction and at the indicated velocity.

Further, in a case in which the selected behavior is an intervention behavior, the control section 52 controls the notification section 46 to output a voice message such as "move out of the way" or the like, or to emit a warning sound.

Hardware structures of the self-position estimation device 40 are described next.

As illustrated in Fig. 9, the self-position estimation device 40 has a CPU (Central Processing Unit) 61, a ROM (Read Only Memory) 62, a RAM (Random Access Memory) 63, a storage 64 and a communication interface 65. The respective structures are connected so as to be able to communicate with one another via a bus 66.

In the present embodiment, the self-position estimation program is stored in the storage 64. The CPU 61 is a central computing processing unit, and executes various programs and controls the respective structures. Namely, the CPU 61 reads-out a program from the storage 64, and executes the program by using the RAM 63 as a workspace. The CPU 61 caries out control of the above-described respective structures, and various computing processings, in accordance with the programs recorded in the storage 64.

The ROM 62 stores various programs and various data. The RAM 63 temporarily stores programs and data as a workspace. The storage 64 is structured by an HDD (Hard Disk Drive) or an SSD (Solid State Drive), and stores various programs, including the operating system, and various data.

The communication interface 65 is an interface for communicating with other equipment, and uses standards such as, for example, Ethernet^{®}, FDDI, Wi-Fi^{®}, or the like.

Operation of the self-position estimation device 40 is described next.

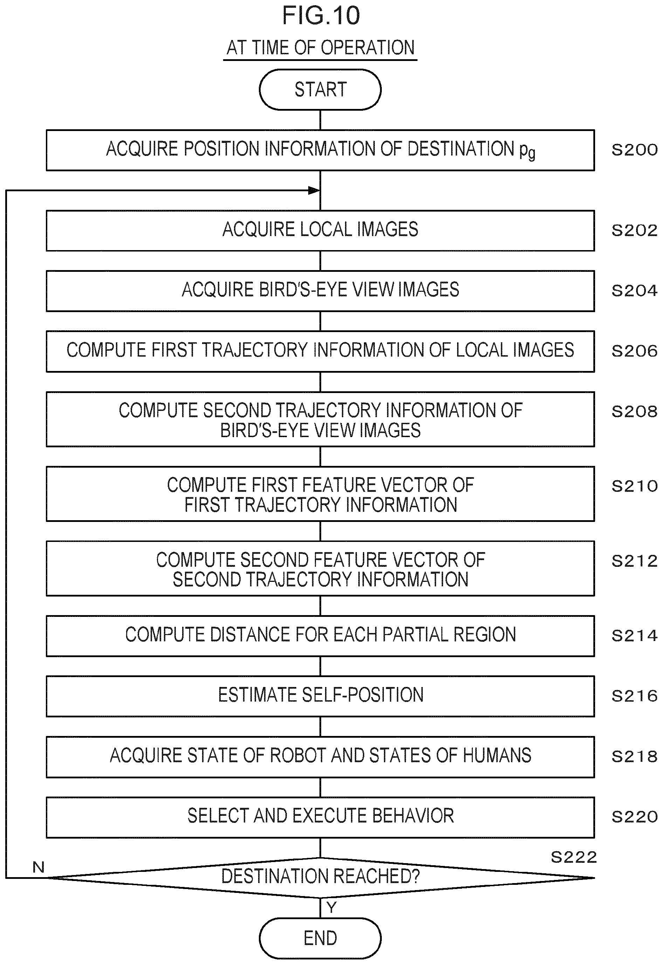

Fig. 10 is a flowchart illustrating the flow of self-position estimation processing by the self-position estimation device 40. The self-position estimation processing is carried out due to the CPU 51 reading-out the self-position estimation program from the storage 64, and expanding and executing the program in the RAM 63.

In step S200, as the acquiring section 50, the CPU 61 acquires position information of the destination p_{g} by wireless communication from an unillustrated external device.

In step S202, as the acquiring section 50, the CPU 61 acquires the N local images I1 (= {I1₁, I1₂, ..., I1_{N}}) that are in time series from the camera 42.

In step S204, as the acquiring section 50, the CPU 61 asks an unillustrated external device for the N bird's-eye view images 12 (= {I2₁, I2₂, ..., I2_{N}}), which are in time series and are synchronous with the local images I1, and acquires the images. At this time, the CPU 61 transmits the position pₜ₋₁ of the robot RB, which was estimated by the present routine having been executed the previous time, to the external device, and acquires bird's-eye view images, which include the periphery of the position pₜ₋₁ of the robot RB that was estimated the previous time, from the external device.

In step S206, as the control section 52, the CPU 61 computes the first trajectory information t₁ on the basis of the local images I1.

In step S208, as the control section 52, the CPU 61 computes the second trajectory information t₂ on the basis of the bird's-eye view images 12.

In step S210, as the control section 52, the CPU 61 computes the first feature vector *φ*₁(t₁) on the basis of the first trajectory information t₁.

In step S212, as the control section 52, the CPU 61 computes the second feature vectors *φ*₂(t₂₁) ~ *φ*₂(t_{2M}) on the basis of the second trajectory information t₂₁ ~ t_{2M} of the partial regions W₁ ~ W_{M}, among the second trajectory information t₂.

In step S214, as the control section 52, the CPU 61 computes distances g(*φ*₁(t₁), *φ*₂(t₂₁)) ~ g(*φ*₁(t₁), *φ*₂(t_{2M})) that express the respective degrees of similarity between the first feature vector *φ*₁(t₁) and the second feature vectors *φ*₂(t₂₁) ~ *φ*₂(t_{2M}). Namely, the CPU 61 computes the distance for each of the partial regions W.

In step S216, as the control section 52, the CPU 61 estimates, as the self-position pₜ, a representative position, e.g., the central position, of the partial region W of the second feature vector *φ*₂(t₂) that corresponds to the smallest distance among the distances g(*φ*₁(t₁), *φ*₂(t₂₁)) ~ g(*φ*₁(t₁), *φ*₂(t_{2M})) computed in step S214.

In step S218, as the acquiring section 50, the CPU 61 acquires the velocity of the robot as a state of the robot RB from the robot information acquiring section 44. Further, the CPU 61 analyzes the local images acquired in step S202 by using a known method, and computes state information relating to the states of the humans HB existing at the periphery of the robot RB, i.e., the positions and velocities of the humans HB.

In step S220, on the basis of the destination information acquired in step S200, the position of the robot RB estimated in step S216, the velocity of the robot RB acquired in step S218, and the state information of the humans HB acquired in step S218, the CPU 61, as the control section 52, selects a behavior corresponding to the state of the robot RB, and controls at least one of the notification section 46 and the autonomous traveling section 48 on the basis of the selected behavior.

In step S222, as the control section 52, the CPU 61 judges whether or not the robot RB has arrived at the destination p_{g}. Namely, the CPU 61 judges whether or not the position pₜ of the robot RB coincides with the destination p_{g}. Then, if it is judged that the robot RB has reached the destination p_{g}, the present routine ends. On the other hand, if it is judged that the robot RB has not reached the destination p_{g}, the routine moves on to step S202, and repeats the processings of steps S202 ~ S222 until it is judged that the robot RB has reached the destination p_{g}. Note that the processings of steps S202, S204 are examples of the acquiring step. Further, the processings of steps S206 ~ S216 are examples of the estimating step.

In this way, the robot RB travels autonomously to the destination while estimating the self-position on the basis of the self-position estimation model learned by the self-position estimation model learning device 10.

Note that, although the present embodiment describes a case in which the robot RB has the self-position estimation device 40, the function of the self-position estimation device 40 may be provided at an external server. In this case, the robot RB transmits the local images captured by the camera 42 to the external server. On the basis of the local images transmitted from the robot RB and bird's-eye view images acquired from a device that provides bird's-eye view images, the external server estimates the position of the robot RB, and transmits the estimated position to the robot RB. Then, the robot RB selects a behavior on the basis of the self-position received from the external server, and travels autonomously to the destination.

Further, although the present embodiment describes a case in which the self-position estimation subject is the autonomously traveling robot RB, the technique of the present disclosure is not limited to this, and the self-position estimation subject may be a portable terminal device that is carried by a person. In this case, the function of the self-position estimation device 40 is provided at the portable terminal device.

Further, any of various types of processors other than a CPU may execute the robot controlling processing that is executed due to the CPU reading software (a program) in the above-described embodiments. Examples of processors in this case include PLDs (Programmable Logic Devices) whose circuit structure can be changed after production such as FPGAs (Field-Programmable Gate Arrays) and the like, and dedicated electrical circuits that are processors having circuit structures that are designed for the sole purpose of executing specific processings such as ASICs (Application Specific Integrated Circuits) and the like, and the like. Further, the self-position estimation model learning processing and the self-position estimation processing may be executed by one of these various types of processors, or may be executed by a combination of two or more of the same type or different types of processors (e.g., plural FPGAs, or a combination of a CPU and an FPGA, or the like). Further, the hardware structures of these various types of processors are, more specifically, electrical circuits that combine circuit elements such as semiconductor elements and the like.

Further, the above-described respective embodiments describe forms in which the self-position estimation model learning program is stored in advance in the storage 14, and the self-position estimation program is stored in advance in the storage 64, but the present disclosure is not limited to this. The programs may be provided in a form of being recorded on a recording medium such as a CD-ROM (Compact Disc Read Only Memory), a DVD-ROM (Digital Versatile Disc Read Only Memory), a USB (Universal Serial Bus) memory, or the like. Further, the programs may in a form of being downloaded from an external device over a network.

All publications, patent applications, and technical standards mentioned in the present specification are incorporated by reference into the present specification to the same extent as if such individual publication, patent application, or technical standard was specifically and individually indicated to be incorporated by reference.

### Explanation of Reference Numerals

- 1: self-position estimation model learning system
- 10: self-position estimation model learning device
- 20: simulator
- 30: acquiring section
- 32: learning section
- 33: trajectory information computing section
- 34: feature vector computing section
- 35: distance computing section
- 36: self-position estimation section
- 40: self-position estimation device
- 42: camera
- 44: robot information acquiring section
- 46: notification section
- 48: autonomous traveling section
- 50: acquiring section
- 52: control section
- HB: human
- RB: robot

## Claims

1. A self-position estimation model learning method, comprising, by a computer:
acquiring, in time series, local images captured from a viewpoint of a self-position estimation subject in a dynamic environment, and bird's-eye view images that are captured from a position of looking down on the self-position estimation subject and that are synchronous with the local images; and
learning a self-position estimation model that has, as input, the local images and the bird's-eye view images acquired in time series, and that outputs a position of the self-position estimation subject.

2. The self-position estimation model learning method of Claim 1, wherein the learning includes:
computing first trajectory information on the basis of the local images, and computing second trajectory information on the basis of the bird's-eye view images;
computing a first feature amount on the basis of the first trajectory information, and computing a second feature amount on the basis of the second trajectory information;
computing a distance between the first feature amount and the second feature amount;
estimating the position of the self-position estimation subject on the basis of the distance; and
updating parameters of the self-position estimation model such that, as a degree of similarity between the first feature amount and the second feature amount becomes higher, the distance becomes smaller.

3. The self-position estimation model learning method of Claim 2, wherein:
the second feature amount is computed on the basis of the second trajectory information in a plurality of partial regions that are selected from a region that is in a vicinity of a position of the self-position estimation subject that was estimated a previous time,
the distance is computed for each of the plurality of partial regions, and
the position of the self-position estimation subject is estimated as a predetermined position of a partial region having a smallest distance among the distances computed for the plurality of partial regions.

4. A self-position estimation model learning device, comprising:
an acquisition section that acquires, in time series, local images captured from a viewpoint of a self-position estimation subject in a dynamic environment, and bird's-eye view images that are captured from a position of looking down on the self-position estimation subject and that are synchronous with the local images; and
a learning section that learns a self-position estimation model that has, as input, the local images and the bird's-eye view images acquired in time series, and that outputs a position of the self-position estimation subject.

5. A self-position estimation model learning program executable by a computer to perform processing, the processing comprising:
acquiring, in time series, local images captured from a viewpoint of a self-position estimation subject in a dynamic environment, and bird's-eye view images that are captured from a position of looking down on the self-position estimation subject and that are synchronous with the local images; and
learning a self-position estimation model that has, as input, the local images and the bird's-eye view images acquired in time series, and that outputs a position of the self-position estimation subject.

6. A self-position estimation method executable by a computer to perform processing, the processing comprising:
acquiring, in time series, local images captured from a viewpoint of a self-position estimation subject in a dynamic environment, and bird's-eye view images that are captured from a position of looking down on the self-position estimation subject and that are synchronous with the local images; and
estimating a self-position of the self-position estimation subject on the basis of the local images and the bird's-eye view images acquired in time series, and on the basis of the self-position estimation model learned by the self-position estimation model learning method of any one of Claims 1 to 3.

7. A self-position estimation device, comprising:
an acquisition section that acquires, in time series, local images captured from a viewpoint of a self-position estimation subject in a dynamic environment, and bird's-eye view images that are captured from a position of looking down on the self-position estimation subject and that are synchronous with the local images; and
an estimation section that is configured to estimate a self-position of the self-position estimation subject on the basis of the local images and the bird's-eye view images acquired in time series, and on the basis of the self-position estimation model learned by the self-position estimation model learning device of Claim 4.

8. A self-position estimation program executable by a computer to perform processing, the processing comprising:
acquiring, in time series, local images captured from a viewpoint of a self-position estimation subject in a dynamic environment, and bird's-eye view images that are captured from a position of looking down on the self-position estimation subject and that are synchronous with the local images; and
estimating a self-position of the self-position estimation subject on the basis of the local images and the bird's-eye view images acquired in time series, and on the basis of the self-position estimation model learned by the self-position estimation model learning method of any one of Claims 1 to 3.

9. A robot, comprising:
an acquisition section that acquires, in time series, local images captured from a viewpoint of the robot in a dynamic environment, and bird's-eye view images that are captured from a position of looking down on the robot and that are synchronous with the local images;
an estimation section that is configured to estimate a self-position of the robot on the basis of the local images and the bird's-eye view images acquired in time series, and on the basis of the self-position estimation model learned by the self-position estimation model learning device of Claim 4;
an autonomous traveling section configured to cause the robot to travel autonomously; and
a control section that is configured, on the basis of the position estimated by the estimation section, to control the autonomous traveling section such that the robot moves to a destination.
